(19) Europäisches Patentamt
European Patent Office
Office européen des brevets

(11) **EP 2 200 322 A1**

(12) **EUROPEAN PATENT APPLICATION**

(43) Date of publication:
**23.06.2010 Bulletin 2010/25**

(51) Int Cl.:
***H04N 7/26*** *(2006.01)*     ***H04N 7/50*** *(2006.01)*

(21) Application number: **08305991.5**

(22) Date of filing: **22.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing**
**92443 Issy-les-Moulineaux Cedex (FR)**

(72) Inventors:
• **Allie, Stéphane**
**35230, St. Armel (FR)**

• **Ducloux, Xavier**
**35200, Rennes (FR)**
• **Bernard, Pascal**
**35760, Montgermont (FR)**

(74) Representative: **Rittner, Karsten**
**Deutsche Thomson OHG**
**European Patent Operations**
**Karl-Wiechert-Allee 74**
**30625 Hannover (DE)**

(54) **Method and device for estimating a bit rate required for encoding a block of an image**

(57) The invention is related to a method and a device for estimating a bit rate ($CE_k$) required for encoding a block ($F_k$) of an image.

Said method uses a further bit rate ($CR_1$) used for encoding a further block ($F_1$) of a further image of the same type for said estimate ($CE_k$) and comprises the steps of: using said block ($F_k$) for determining an activity ($MAS_k$), using said further block ($F_1$) for determining a further activity ($MAS_1$) and determining said bit rate estimate ($CE_k$) using said further bit rate ($CR_1$), said activity ($MAS_k$) and said further activity ($MAS_1$).

Activity is a fast calculable measure which reflects the complexity of image content and therefore is suitable for scaling said further bit rate such that it provides a good estimate.

Fig. 1

**Description**

<u>Background</u>

The invention is related to a method and a device for estimating a bit rate required for encoding a block of an image.

Coding cost or bit rate estimation is useful for encoding under the constraint of limited bandwidth or limited storage capacity. By help of bit rate estimates, quantization parameters can be adjusted such that said constraints are met.

The most simple bit rate estimation is based on the assumption that the bit rate to-be-estimated equals a further bit rate which was required for encoding of a further block which is encoded, already.

There are different encoding types of images classified according the prediction type applied, namely intra-prediction inter-prediction and bidirectional prediction. Each prediction type has individual characteristics regarding the resulting bit rate. Therefore, said further block may be chosen from a further image of the same type as the image comprising the block for which a bit rate estimate is desired.

Still, simply equating the bit rate to-be-estimated with the further bit rate which was required for encoding of said further block results in quite poor estimates as the bit rate in general is governed by characteristics of the image content. For instance, coding costs required for an unstructured monochrome image does not provide much information about the coding costs of a polychrome image with many vivid details even if both are encoded according to the same prediction type.

Thus, there is a need for the provision of information regarding said block for which the bit rate shall be estimated and the further block on which said estimated shall be based wherein said information is to be used for making the bit rate estimate more precise.

<u>Invention</u>

The inventors recognized that such information comprises the activities of the block and the further block and propose the method according to claim 1 and the device according to claim 10 for improved bit rate estimates.

Said method for estimating a bit rate required for encoding a block of an image uses a further bit rate used for encoding a further block of a further image of the same type for estimating said bit rate and comprises the steps of using said block for determining an activity, using said further block for determining a further activity, and determining said bit rate estimate using said further bit rate, said activity and said further activity.

Activity is a fast calculable measure which reflects the complexity of image content and therefore is suitable for scaling said further bit rate such that it provides a good estimate.

In an embodiment, said bit rate estimate is determined proportional to said further bit rate weighted by the quotient of said activity divided by said further activity.

Either only said block, some blocks of said image, for instance of the same slice, or the entire image is used for determining the activity. Correspondingly, either only said further block, some yet further blocks of said further image or the entire further image is used for determining the further activity.

For inter-predicted or bidirectional predicted image where a reference block comprised in a reference image is to be used for encoding of said block and said further block is encoded using a further reference block comprised in a further reference image, said activity and said further activity are temporal activities wherein said reference block is further used for determining said activity and said further reference block is further used for determining said further activity.

Then determining said activity may comprise determining a sum of absolute differences between pixels of said block and pixels of said reference block and determining said further activity may comprise determining a further sum of further absolute differences between pixels of said further block and pixels of said further reference block.

And/or, determining said activity may comprise determining a sum of absolute differences between pixels of said image and pixels of said reference image and determining said further activity may comprise determining a further sum of further absolute differences between pixels of said further image and pixels of said further reference image.

For intra-coded image where a reference block comprised in the image is to be used for encoding of said block and said further block is encoded using a further reference block comprised in said further image, determining said activity comprises determining a sum of absolute differences between adjacent pixels of said block and determining said further activity comprises determining a further sum of further absolute differences between adjacent pixels of said further block.

Said adjacent pixels may comprise horizontally and/or vertically adjacent pixels.

The method may further comprise the step of determining a quantization parameter for encoding of said block using a ratio of said bit rate estimate divided by a target bit rate and a further quantization parameter used for encoding of said further block.

Drawings

Exemplary embodiments of the invention are illustrated in the drawings and are explained in more detail in the following description.

In the figures:

Fig. 1     exemplarily depicts quantization parameter adjustment at frame level for I-frames and

Fig. 2     exemplarily depicts quantization parameter adjustment at frame level for B-frames and/or p-frames.

Exemplary embodiments

In an exemplary embodiment, coding cost $CE^k_i$, in terms of bit rate, of an $i$-th block $B^i_k$ in image $F_k$ is estimated proportional to actual or real coding cost $CR^j_l$ of an j-th block $B^j_l$ of an other image $F_l$, with $l<k$, which already has been encoded using a quantization parameter $Q^j_l$ associated with the other block $B^j_l$ of the other image $F_l$:

$$CE^i_k \sim CR^j_l \qquad\qquad (1)$$

A weight $W^{kl}_{ij}$ is determined which scales $CR^j_l$ according to the content of the block $B^k_i$ and the other block $B^j_i$:

$$CE^i_k = W^{ij}_{kl} * CR^j_l \qquad\qquad (2)$$

Said weight $W^{kl}_{ij}$ is determined proportional to the ratio of an activity $MAT^i_k$ measured with respect to block $B^i_k$ of image $k$ and a further activity $MAT^j_l$ measured with respect to the other block $B^j_l$ of the other image $F_l$:

$$W^{ij}_{kl} = MAT^i_k / MAT^j_l \qquad\qquad (3)$$

Similarly, an applicable quantization parameter $Q^i_k$ associated with block $B^i_k$ and to-be-used for encoding of said block $B^i_k$, is determined proportional to the used quantization parameter $Q^j_l$:

$$Q^i_k \sim Q^j_l \qquad\qquad (4)$$

A further weight $V^{ij}_{kl}$ is determined which scales $Q^j_l$ according the ration of the estimated coding cost $CE^i_k$ divided by a desirable coding cost $CV^i_k$:

$$Q^i_k = V^{ij}_{kl} * Q^j_l \qquad\qquad (5)$$

with

$$V^{ij}_{kl} = (W^{ij}_{kl} * CR^j_l) / CV^i_k \qquad\qquad (6)$$

It has been found advantageous, that the other image $F_l$ used for the estimate is of the same type as the image $F_k$ which shall be encoded. For instance, the other image $F_l$ may be the last one of those already encoded images which are encoded using the prediction type which is envisaged for image $F_k$, also. That is, if image $F_k$ is to be intra-encoded as an I-frame, the other image $F_l$ may be chosen as the last I-frame which was encoded. And if image $F_k$ is to be inter-encoded as a P-frame, the other image $F_l$ may be chosen as the last P-frame which was encoded. While, if image $F_k$ is to be bidirectional encoded as a B-frame, the other image $F_l$ may be chosen as the last B-frame which was encoded.

Coding costs are caused by a residual by which the block $B^i_k$ differs from a reference block $R^i_k$ wherein the indices of reference block $R^i_k$ indicate that this is the reference block used for coding block $B^i_k$. Then, activity $MAT^i_k$ may be determined as a sum of absolute pixels differences between block $B^i_k$ and reference block $R^i_k$:

$$MAT^i_k = \sum_{n=0}^{N-1} \sum_{m=0}^{M-1} \left| B^i_k(n,m) - R^i_k(n,m) \right| \tag{7}$$

wherein $B^i_k(n,m)$ and $R^i_k(n,m)$ refer to the $n$-th pixel of the $m$-th column of $B^i_k$ and of $R^i_k$, respectively, of which each has $N$ rows and $M$ columns in total.

It is noted that the term "block" is used for any block of an image independent of block size. The term block may refer to an 8x8 block, to a 16x16 macroblock, to a rectangle of $N$ rows and $M$ columns or to the entire image.

It had been found that this measure is well suited for coding cost estimates for inter-predicted images, so-called P-frames, and bidirectional predicted images, so-called B-Frames. For B-frames and P-frames, the activity measure of equation 7 is also called temporal activity. Its calculation is simple or even may be available already from motion estimation.

But, for intra-predicted frames this measure is ill-suited in particular if $B^i_k$ and $R^i_k$ both refer to the entire image $F_k$.

Therefore, spatial activities $MAS^i_k$ and $MAS^j_l$ may be determined for intra-predicted frames. As I-frames are encoded by help of reference blocks comprised in the same image, the following spatial activity measure may be used for coding cost estimation:

$$MAS^i_k = \sum_{n=0}^{N-2} \sum_{m=0}^{M-1} \left| B^i_k(n,m) - B^i_k(n+1,m) \right| + \sum_{n=0}^{N-1} \sum_{m=0}^{M-2} \left| B^i_k(n,m) - B^i_k(n,m+1) \right| \tag{8}$$

The sum of absolute pixel differences between adjacent or collocated pixels in an I-frame reflects the vividness and richness in details of the image. Then instead of $MAT^i_k$ and $MAT^j_l$, $MAS^i_k$ and $MAS^j_l$ may be used in equation 3 for determining $W^{ij}_{kl}$ if the current frame is an I-frame:

$$W^{ij}_{kl} = MAS^i_k \ / \ MAS^j_l \tag{9}$$

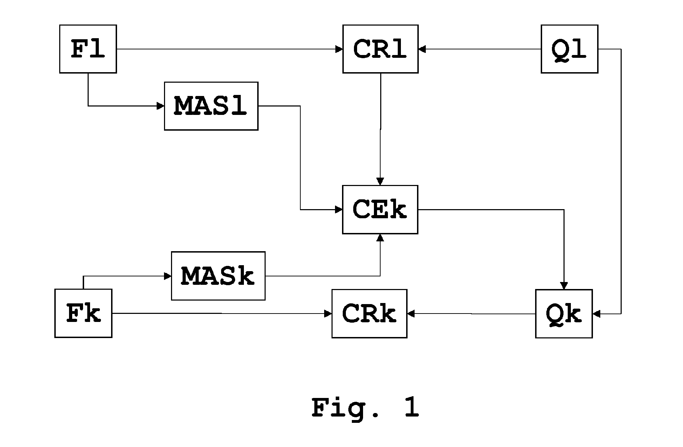

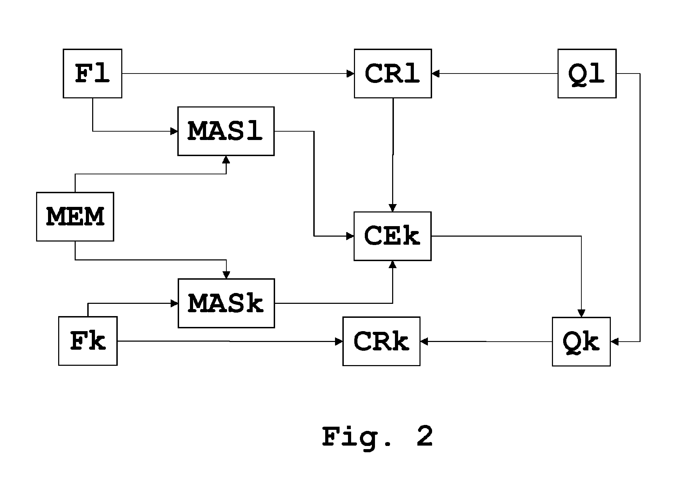

Fig. 1 exemplarily depicts quantization parameter determination for I-frames at frame level. Fig. 2 exemplarily depicts quantization parameter determination for P-frames or B-frames at frame level. That is, in the context of the exemplary embodiments depicted in fig. 1 and fig. 2, entire images $F_k$ and $F_l$ are treated as single blocks for activity measure determination according to equations 7 respectively equation 8. Therefore, superscripted indices $i$ and $j$ are omitted in the following.

For Frame $F_l$ which is already encoded using quantization parameter $Q_l$, the real coding costs $CR_l$ are determined. Further, spatial activity $MAS_l$ of frame $F_l$ is determined.

Both, real coding costs $CR_l$ and spatial activity $MAS_l$ of frame $F_l$ are used together with spatial activity $MAS_k$ of to-be-encoded frame $F_k$ for determining coding cost estimate $CE_k$.

For determining quantization parameter $Q_k$ with which frame $F_k$ is to-be-encoded, the determined coding cost estimate $CE_k$ and quantization parameter $Q_l$ used for encoding of frame $F_l$ is used. Encoding frame $F_k$ with determined quantization parameter $Q_k$ then result in real encoding costs $CR_k$. which may be used subsequently for determining a quantization parameter to be used for encoding of a subsequent I-frame.

Fig. 2 differs from fig. 1 in so far as frames $F_k$ and $F_l$ are P-frames or B-frames for which temporal activities $MAT_k$ and $MAT_l$ are according to equation 7 are determined instead of the spatial activities of fig. 1. Different from determination of spatial activities, determination of temporal activities $MAT_k$ and $MAT_l$ is based not only on frame $F_k$ respectively $F_l$, but also takes reference frames envisaged or used for encoding into account, said reference rframes being provided by memory MEM.

**Claims**

1. Method for estimating a bit rate ($CE_k$) required for encoding a block ($F_k$) of an image, said bit rate being estimated using a further bit rate ($CR_l$) used for encoding a further block ($F_l$) of a further image of the same type, said method comprises the steps of

   - using said block ($F_k$) for determining an activity ($MAT_k$, $MAS_k$),
   - using said further block ($F_l$) for determining a further activity ($MAT_l$, $MAS_l$),
   - determining said bit rate estimate ($CE_k$) using said further bit rate ($CR_l$), said activity ($MAT_k$, $MAS_k$) and said further activity ($MAT_l$, $MAS_l$).

2. Method of claim 1, further comprising

   - determining said bit rate estimate ($CE_k$) proportional to said further bit rate ($CR_l$) weighted by the quotient of said activity ($MAT_k$, $MAS_k$) divided by said further activity ($MAT_l$, $MAS_l$).

3. Method of claim 1 or 2, wherein

   - the entire image ($F_k$) is used for determining the activity ($MAT_k$, $MAS_k$) and the entire further image ($F_l$) is used for determining the further activity ($MAT_l$, $MAS_l$).

4. Method of claim 1, 2 or 3, wherein

   - a reference block comprised in a reference image is to be used for encoding of said block ($F_k$),
   - said further block ($F_l$) is encoded using a further reference block comprised in a further reference image and
   - said activity and said further activity are temporal activities wherein said reference block is further used for determining said activity ($MAT_k$) and said further reference block is further used for determining said further activity ($MAT_l$).

5. Method of claim 4, wherein

   - determining said activity ($MAT_k$) comprises determining a sum of absolute differences between pixels of said block ($F_k$) and pixels of said reference block and
   - determining said further activity ($MAT_l$) comprises determining a further sum of further absolute differences between pixels of said further block ($F_l$) and pixels of said further reference block.

6. Method of claim 4 or 5, wherein

   - determining said activity ($MAT_k$) comprises determining a sum of absolute differences between pixels of said image and pixels of said reference image and
   - determining said further activity ($MAT_l$) comprises determining a further sum of further absolute differences between pixels of said further image and pixels of said further reference image.

7. Method of one of the claims 1 to 3, wherein

   - a reference block comprised in the image is to be used for encoding of said block ($F_k$),
   - said further block ($F_l$) is encoded using a further reference block comprised in said further image, and
   - said activity and said further activity are temporal activities wherein
   - determining said activity ($MAS_k$) comprises determining a sum of absolute differences between adjacent pixels of said block ($F_k$) and
   - determining said further activity ($MAS_l$) comprises determining a further sum of further absolute differences between adjacent pixels of said further block ($F_l$).

8. Method of claim 7, wherein

- said adjacent pixels comprise horizontally and/or vertically adjacent pixels.

9. Method according to one of the preceding claims, further comprising

   - determining a quantization parameter ($Q_k$) for encoding of said block using a ratio of said bit rate estimate ($CE_k$) divided by a target bit rate and a further quantization parameter ($Q_l$) used for encoding of said further block ($F_k$).

10. Device for estimating a bit rate ($CE_k$) required for encoding a block ($F_k$) of an image, said device being adapted for using a further bit rate ($CR_l$) used for encoding a further block ($F_l$) of a further image of the same type, said device comprising

    - means for using said block ($F_k$) for determining an activity ($MAT_k$, $MAS_k$),
    - means for using said further block ($F_l$) for determining a further activity ($MAT_l$, $MAS_l$),
    - means for determining said bit rate estimate ($CE_k$) using said further bit rate ($CR_l$), said activity ($MAT_k$, $MAS_k$) and said further activity ($MAT_l$, $MAS_l$).

11. Device of claim 10, wherein

    - means for determining a quantization parameter using a ratio of said bit rate estimate divided by a target bit rate and a further quantization parameter used for encoding of said further block.

12. Device of claim 10 or 11, further comprising

    - said means for determining are adapted for determining said bit rate estimate proportional to said further bit rate weighted by the quotient of said activity divided by said further activity.

13. Device of one of the claims 10 to 12, wherein

    - a reference block comprised in a reference image is to be used for encoding of said block,
    - said further block is encoded using a further reference block comprised in said reference image or in a further reference image and
    - said activity and said further activity are temporal activities wherein said device is adapted for further using said reference block for determining said activity and for further using said further reference block for determining said further activity.

14. Device of claim 13, wherein

    - determining said activity comprises determining a sum of absolute differences between pixels of said block and pixels of said reference block and
    - determining said further activity comprises determining a further sum of further absolute differences between pixels of said further block and pixels of said further reference block.

15. Device of one of the claims 10 to 14, wherein

    - a reference block comprised in the image is to be used for encoding of said block,
    - said further block is encoded using a further reference block comprised in said further image,
    - said activity and said further activity are spatial activities,
    - said device is adapted for determining a sum of absolute differences between adjacent pixels of said block for determining said activity and
    - said device is adapted for determining a further sum of further absolute differences between adjacent pixels of said further block for determining said further activity.

Fig. 1

Fig. 2

Europäisches
Patentamt
European
Patent Office
Office européen
des brevets

**EUROPEAN SEARCH REPORT**

Application Number

EP 08 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 6 731 685 B1 (LIU VINCENT [US] ET AL)<br>4 May 2004 (2004-05-04)<br><br>* figures 4-6 *<br>* column 2, lines 15-35 *<br>* column 2, line 62 - column 3, line 7 *<br>* column 4, line 20 - column 5, line 43 *<br>* column 6, line 44 - column 8, line 43 *<br>* column 10, lines 42-46 *<br>* column 11, lines 3-9 *<br>* column 13, line 41 - column 14, line 34 * | 1,3-6,<br>10,13,14<br>2,7,8,<br>12,15 | INV.<br>H04N7/26<br>H04N7/50 |
| X | US 2004/202247 A1 (CHANG YUNG-CHING [TW] ET AL) 14 October 2004 (2004-10-14)<br>* paragraphs [0004] - [0012] *<br>* paragraphs [0019] - [0055] * | 1-8,10,<br>12-15 | |
| X | BO XIE ET AL: "Sequence-based rate control for constant quality video" PROCEEDINGS / 2002 INTERNATIONAL CONFERENCE ON IMAGE PROCESSING : 22 - 25 SEPTEMBER 2002, ROCHESTER, NEW YORK, USA, IEEE OPERATIONS CENTER, PISCATAWAY, NJ, vol. 1, 22 September 2002 (2002-09-22), pages 77-80, XP010607264 ISBN: 978-0-7803-7622-9<br>* pages 78-79, section 2 *<br>* pages 79-80, section 4 * | 1,3,10 | TECHNICAL FIELDS SEARCHED (IPC)<br>H04N |
| A | US 5 323 187 A (PARK KU-MAN [KR])<br>21 June 1994 (1994-06-21)<br>* column 4, line 60 - column 5, line 46 *<br>* column 7, line 24 - column 8, line 65 * | 1-8,10,<br>12-15 | |

-/--

~~The present search report has been drawn up for all claims~~

| Place of search | Date of completion of the search | Examiner |
|---|---|---|
| The Hague | 22 July 2009 | André, Thomas |

EPO FORM 1503 03.82 (P04C01)

**EUROPEAN SEARCH REPORT**

Application Number

EP 08 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FR 2 914 125 A (THOMSON LICENSING SAS [FR]) 26 September 2008 (2008-09-26) <br> * page 2, line 26 - page 4, line 10 * <br> * page 5, line 23 - page 6, line 15 * <br> ----- | 1-8,10, 12-15 | |
| A | VISCITO E ET AL: "A VIDEO COMPRESSION ALGORITHM WITH ADAPTIVE BIT ALLOCATION AND QUANTIZATION" <br> VISUAL COMMUNICATION AND IMAGE PROCESSING '91: VISUAL COMMUNICATION. BOSTON, NOV. 11 - 13, 1991; [PROCEEDINGS OF SPIE], BELLINGHAM, SPIE, US, <br> vol. 1605 PART 01/02, <br> 11 November 1991 (1991-11-11), pages 58-72, XP000479218 <br> * pages 62-63, sections 3.1-3.2 * <br> ----- | 1-8,10, 12-15 | |
| A | EP 1 063 851 A (VICTOR COMPANY OF JAPAN [JP]) 27 December 2000 (2000-12-27) <br> * paragraphs [0039] - [0047] * <br> * paragraphs [0062] - [0107] * <br> ----- | 1-8,10, 12-15 | TECHNICAL FIELDS SEARCHED (IPC) |

~~The present search report has been drawn up for all claims~~

| Place of search | Date of completion of the search | Examiner |
|---|---|---|
| The Hague | 22 July 2009 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................
& : member of the same patent family, corresponding document

EPO FORM 1503 03.82 (P04C01)

Europäisches
Patentamt

European
Patent Office

Office européen
des brevets

**Application Number**

EP 08 30 5991

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1- 8, 10, 12- 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
### SHEET B

Application Number

EP 08 30 5991

The Search Division considers that the present European patent application does not comply with the requirements of unity of invention and relates to several inventions or groups of inventions, namely:

```
    1. claims: 1-8,10,12-15

                         using activities for estimating a bit rate
                              ---

    2. claims: 9,11

            adjusting a quantization parameter based on estimated and
            target bit rates
                         ---
```

**ANNEX TO THE EUROPEAN SEARCH REPORT
ON EUROPEAN PATENT APPLICATION NO.**                    EP 08 30 5991

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2009

| Patent document cited in search report | | Publication date | Patent family member(s) | | Publication date |
|---|---|---|---|---|---|
| US 6731685 | B1 | 04-05-2004 | NONE | | |
| US 2004202247 | A1 | 14-10-2004 | NONE | | |
| US 5323187 | A | 21-06-1994 | JP 2795783<br>JP 5260312 | B2<br>A | 10-09-1998<br>08-10-1993 |
| FR 2914125 | A | 26-09-2008 | WO 2008116836 | A2 | 02-10-2008 |
| EP 1063851 | A | 27-12-2000 | CN 1278692<br>DE 60035740<br>US 6600783 | A<br>T2<br>B1 | 03-01-2001<br>06-12-2007<br>29-07-2003 |

EPO FORM P0459